Europäisches Patentamt

European Patent Office

Office européen des brevets

(11) Numéro de publication: **0 237 426**
**A1**

## (12) DEMANDE DE BREVET EUROPEEN

(21) Numéro de dépôt: **87400501.0**

(22) Date de dépôt: **06.03.87**

(51) Int. Cl.⁴: **G 02 B 6/38**

(30) Priorité: **07.03.86 FR 8603237**

(43) Date de publication de la demande:
**16.09.87 Bulletin 87/38**

(84) Etats contractants désignés: **DE GB NL**

(71) Demandeur: **Mehadji, Kada**
**Rue Ropartz Brélevenez**
**F-22300 Lannion (FR)**

(72) Inventeur: **Mehadji, Kada**
**Rue Ropartz Brélevenez**
**F-22300 Lannion (FR)**

(74) Mandataire: **Mongrédien, André et al**
**c/o BREVATOME 25, rue de Ponthieu**
**F-75008 Paris (FR)**

(54) **Procédé et système de positionnement relatif de deux fibres optiques en vue d'établir entre elles une liaison optique.**

(57) Selon l'invention, pour chaque fibre (2, 4), on forme sur un écran, au moins une image de cette fibre et l'on représente sur l'écran, sur cette image, la trace du coeur de la fibre, cette trace étant dans sa position effective, on déplace sur l'écran, les contours de l'une des fibres et du coeur de celle-ci jusqu'à ce que le contour dudit coeur soit aligné avec le contour du coeur de l'autre fibre et l'on déplace ladite fibre jusqu'à ce que son image coïncide avec son contour.
Application au raccordement de fibres optiques.

EP 0 237 426 A1

## Description

PROCEDE ET SYSTEME DE POSITIONNEMENT RELATIF DE DEUX FIBRES OPTIQUES EN VUE D'ETABLIR ENTRE ELLES UNE LIAISON OPTIQUE

La présente invention concerne un procédé et un système de positionnement relatif de deux fibres optiques en vue d'établir entre elles une liaison optique. Elle trouve notamment une application dans le domaine de l'épissurage ou raccordement de fibres optiques, par exemple par soudure à l'arc ou au moyen d'un laser à $CO_2$. De plus, les fibres optiques considérées dans la présente invention peuvent être des fibres monomodes ou multimodes.

On sait que le raccordement de fibres optiques, et en particulier de fibres optiques monomodes, est une opération délicate qui fait appel à un personnel hautement qualifié.

Avant de réaliser ce raccordement, il convient d'aligner les coeurs des fibres de façon aussi précise que possible (ce qui n'est pas facile pour les fibres monomodes dont les coeurs ont des diamètres généralement inférieurs à 10 micromètres).

Ce raccordement peut être réalisé en disposant les extrémités de deux fibres à raccorder dans un même support en vé, mais une telle technique suppose la concentricité du coeur et de la gaine de chaque fibre.

Une autre technique connue utilise l'optimisation du couplage d'énergie lumineuse entre les fibres à raccorder mais ceci nécessite un accès de l'opérateur effectuant le raccordement aux autres extrémités des fibres ainsi qu'un retour d'informations à cet opérateur.

Deux autres techniques connues permettent de s'affranchir de la nécessité d'accéder aux autres extrémités des fibres. L'une de ces techniques nécessite l'emploi d'un microscope à contraste différentiel qui est très encombrant et donc difficile à utiliser ailleurs que dans un laboratoire.

La seconde de ces techniques fait intervenir la fluorescence du coeur des fibres optiques et ne concerne donc essentiellement que les fibres dopées au dioxyde de germanium. Lorsque de telles fibres sont irradiées par un rayonnement ultraviolet, leur coeur émet un rayonnement qui, convenablement traité, permet de localiser le coeur dans chaque fibre et donc d'aligner les deux fibres.

La présente invention a justement pour objet un procédé et un système d'alignement de deux fibres optiques qui ne présentent pas les inconvénients des techniques rappelées ci-dessus, notamment en ce qu'ils ne nécessitent pas que leurs utilisateurs aient accès aux extrémités lointaines des fibres à raccorder, font appel à un matériel peu encombrant et simple à employer et sont utilisables même si les fibres à raccorder sont cylindriques et ont des diamètres extérieurs différents, quels que soient les matériaux dont sont constitués ces fibres et quelle que soit la forme ou la disposition du coeur de ces fibres (coeur excentré, coeur ovale, ...). En effet, contrairement aux deux dernières méthodes connues rappelées plus haut, qui font intervenir des paramètres physiques des fibres, la présente invention ne fait intervenir que les paramètres géométriques de ces fibres, la localisation du coeur dans une fibre étant obtenue par analyse géométrique d'images.

Un autre avantage de la présente invention réside dans le fait que la mise en oeuvre de celle-ci peut être effectuée uniquement sur le site en lequel on souhaite raccorder les fibres optiques.

De façon précise, la présente invention a tout d'abord pour objet un procédé de positionnement relatif d'une première et d'une seconde fibres optiques, en vue d'établir entre elles une liaison optique, procédé caractérisé en ce qu'il comprend les étapes successives suivantes :
- pour chaque fibre, on forme, sur un écran, au moins une image de cette fibre observée suivant au moins un plan parallèle à celle-ci et l'on représente, sur l'écran, sur cette image, la trace du coeur de la fibre, cette trace étant dans sa position effective,
- on déplace, sur l'écran, les contours de la seconde fibre et du coeur de celle-ci jusqu'à ce que le contour dudit coeur soit aligné avec le contour du coeur de la première fibre, et
- l'on déplace la seconde fibre jusqu'à ce que son image coïncide avec le contour correspondant, c'est-à-dire s'insère exactement dans ce contour.

Selon un mode de mise en oeuvre préféré du procédé objet de l'invention
- pour chaque fibre optique, on forme, sur l'écran, des images de cette fibre, observée suivant deux plans perpendiculaires l'un à l'autre et parallèles à la fibre et l'on représente, sur l'écran, sur chacune de ces images, la trace du coeur de la fibre, cette trace étant dans sa position effective,
- on déplace, sur l'écran, les contours de la seconde fibre et du coeur de celle-ci jusqu'à ce que les contours dudit coeur soit respectivement alignés avec les contours du coeur de la première fibre, et
- l'on déplace la seconde fibre jusqu'à ce que ses images coïncident avec les contours correspondants.

Pour chaque fibre, la trace du coeur de celle-ci sur chaque image peut être représentée en formant d'abord sur l'écran une image, de même agrandissement, des sections transversales de la fibre et du coeur de celle-ci, en déplaçant ensuite les contours de ces sections jusqu'à ce que le contour de la section du coeur soit sur la droite équidistante des axes médians respectifs des contours de la fibre et en procédant enfin, sur l'écran, à des rabattements pour aboutir à ladite trace dans sa position effective.

Selon un mode de mise en oeuvre particulier du procédé objet de l'invention, après l'étape de déplacement de la seconde fibre, les deux fibres étant alors en regard l'une de l'autre, on effectue en outre une rotation axiale relative de ces fibres pour augmenter le recouvrement des sections transversales des fibres et/ou des coeurs de celles-ci, sections qui sont en regard l'une de l'autre.

Ce "recouvrement" est bien entendu considéré comme observé en projection orthogonale sur un plan perpendiculaire aux fibres ainsi alignées.

Ce mode de mise en oeuvre particulier permet d'aligner avec une grande précision des fibres dont les coeurs ne sont pas cylindriques et d'optimiser le couplage de fibres à coeur excentré, tout en améliorant la résistance mécanique des soudures que l'on peut être ultérieurement amené à effectuer pour raccorder les fibres alignées.

La présente invention a également pour objet un système de positionnement relatif de deux fibres optiques en vue d'établir entre elles une liaison optique, des extrémités respectives de ces fibres étant alors placées en regard l'une de l'autre, système caractérisé en ce qu'il comprend :
- des moyens de maintien des fibres, aptes à maintenir celles-ci orientées suivant une direction donnée, au moins l'un de ces moyens de maintien étant déplaçable,
- des premiers moyens d'observation permettant d'observer chaque fibre suivant au moins un plan parallèle à celle-ci,
- des seconds moyens d'observation permettant d'observer lesdites extrémités respectives des fibres, et le coeur de chacune d'elles en son extrémité,
- un moniteur vidéo sur l'écran duquel les images des fibres et les images des extrémités de ces fibres et des coeurs respectifs de celles-ci sont destinées à apparaître, et
- des moyens électroniques de traitement d'image, aptes à tracer et à déplacer sur l'écran des lignes ainsi que des contours d'images qui s'y trouvent,
ce système permettant ainsi de déplacer, sur l'écran, les contours de l'une des fibres et du coeur de celle-ci jusqu'à ce que le contour dudit coeur soit aligné avec le contour du coeur de l'autre fibre puis de déplacer ladite fibre jusqu'à ce que son image coïncide avec le contour correspondant.

Selon un mode de réalisation préféré du système objet de l'invention, les premiers moyens d'observation sont prévus pour l'observation de chaque fibre suivant deux plans perpendiculaires l'un à l'autre et parallèles à cette fibre, les images des fibres suivant les deux plans étant alors destinées à apparaître sur le moniteur vidéo.

Les premiers moyens d'observation peuvent comprendre :
- deux premières optiques de grossissement dont les axes optiques sont perpendiculaires l'un à l'autre ainsi qu'à ladite direction,
- deux moyens de réflexion optique, respectivement associés aux premières optiques,
- un moyen séparateur de faisceau apte à capter, par l'intermédiaire des moyens de réflexion, les images formées par les optiques et à transmettre ces images, et
- une caméra vidéo reliée au moniteur et prévue pour observer les images transmises par le séparateur.

Selon un mode de réalisation particulier du système de l'invention, les seconds moyens d'observation comprennent deux secondes optiques de grossissement, chacune d'elles étant prévue pour donner une image de l'extrémité de l'une des fibres.

De préférence, chaque seconde optique, qui est associée à l'une des fibres, est rendue solidaire du moyen de maintien de l'autre fibre, et les axes optiques des secondes optiques sont parallèles à ladite direction, situés à des distances identiques des fibres dont ils sont respectivement rendus solidaires lorsqu'elles sont placées dans leurs moyens de maintien et disposés de manière à être de part et d'autre des fibres lorsque celles-ci sont alignées.

On simplifie ainsi l'utilisation du système objet de l'invention.

Enfin, dans un mode de réalisation préféré, le moyen de maintien déplaçable est en outre prévu pour faire tourner la fibre qu'il maintient autour de l'axe de cette fibre, pour des raisons déjà indiquées plus haut.

La présente invention sera mieux comprise à la lecture de la description qui suit, d'exemples de réalisation donnés à titre purement indicatif et nullement limitatif, en référence aux dessins annexés sur lesquels :
- la figure 1 est une vue en perspective, schématique et partielle, d'un mode de réalisation particulier du système objet de l'invention,
- les figures 2 et 3 sont des vues de dessus, schématiques et partielles, correspondant à deux états du système représenté sur la figure 1,
- les figures 4 à 10 illustrent schématiquement les différentes étapes d'un mode de mise en oeuvre particulier du procédé de l'invention, utilisant le système représenté sur les figures 1 à 3, et
- les figures 11 et 12 illustrent schématiquement une étape supplémentaire de ce procédé, permettant d'améliorer l'alignement des fibres optiques réalisé.

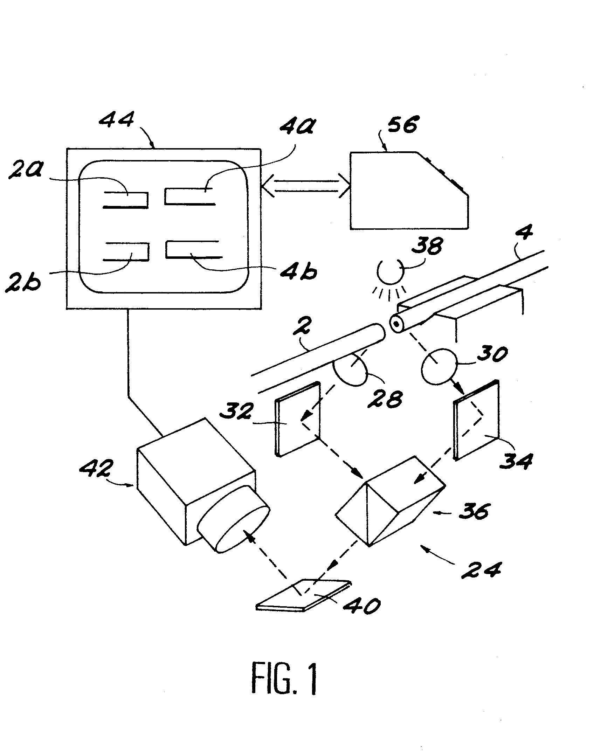

Sur les figures 1 à 3, on a représenté schématiquement un mode de réalisation particulier du système objet de l'invention, destiné à l'alignement optimal d'une première fibre optique 2 et d'une seconde fibre optique 4 par exemple monomodes, deux extrémités respectives 6 et 8 de ces fibres 2 et 4 devant être placées en regard l'une de l'autre.

Le système représenté sur les figures 1 à 3 comprend un moyen 10 de maintien qui est monté sur un support 12 et prévu pour maintenir la fibre 2 orientée suivant une direction Y et un moyen 14 de maintien de la fibre 4 suivant la direction Y. Le moyen de maintien 14 est monté sur un moyen apte à faire tourner la fibre 4 autour de l'axe de celle-ci et déplacer cette fibre 4 suivant une direction Z perpendiculaire à Y. Ce moyen consiste en un support 16 tournant sur un autre support 17 de telle manière qu'il permette la rotation de la fibre 4 autour de l'axe de celle-ci, l'autre support 17 étant déplaçable en translation, suivant la direction Z, sur une platine 18. Cette dernière est déplaçable en translation suivant une direction X perpendiculaire aux directions Y et Z, sur une autre platine 20, elle-même déplaçable en translation suivant la direction Y, par rapport à un bâti 22.

Le système représenté sur les figures 1 à 3 comprend également des premiers moyens d'observation 24 et des seconds moyens d'observation 26 des fibres 2 et 4.

Les premiers moyens d'observation 24 comprennent deux optiques de grossissement 28 et 30, deux miroirs par exemple plans 32 et 34 ainsi qu'un séparateur de faisceau 36. Comme on le voit sur les figures 1 à 3, les optiques 28 et 30 sont rendues fixes par rapport au moyen de maintien 10 lui-même fixe, et orientées de façon que leurs axes optiques soient perpendiculaires l'un à l'autre et situés dans un plan perpendiculaire à la direction Y. Les optiques 28 et 30 sont prévues pour donner de chacune des fibres 2 et 4 sensiblement alignées par des déplacement appropriés de l'autre support 17 et des platines 18 et 20, deux images de même agrandissement, correspondant à l'observation de cette fibre suivant deux plans perpendiculaires l'un à l'autre et parallèles à la fibre.

Les images respectives des fibres 2 et 4 convenablement éclairées par une source lumineuse 38, images qui sont formées par l'optique 28 (respectivement 30), sont transmises à un miroir 40 par exemple plan, par l'intermédiaire du miroir 32 (respectivement 34) puis du séparateur 36. Ces images, réfléchies par le miroir 40, sont observées par une caméra vidéo 42 déplaçable et projetées sur l'écran d'un moniteur vidéo 44 auquel est reliée la caméra 42.

On observe ainsi sur l'écran du moniteur 44 deux images de même agrandissement 2a et 2b (respectivement 4a et 4b) de la fibre 2 (respectivement 4) vue suivant deux plans perpendiculaires l'un à l'autre et parallèles à la direction Y.

Les seconds moyens d'observation 26 comprennent une optique de grossissement 45 montée sur un support 46 qui est fixe par rapport au moyen de maintien 10 et une optique de grossissement 48 montée sur un support 50 qui est fixe par rapport à la platine 18.

L'optique 45 (respectivement 48), en association avec la caméra 42, est prévue pour donner de l'extrémité 8 (respectivement 6) de la fibre 4 (respectivement 2) une image de même agrandissement que les images formées par les optiques 28 et 30.

En outre, les optiques 45 et 48 ont des axes optiques qui sont respectivement parallèles aux fibres 2 et 4 mises en place dans leurs moyens de maintien, situés à des distances identiques de ces fibres et disposés de telle manière qu'ils soient de part et d'autre des fibres lorsque celles-ci sont alignées.

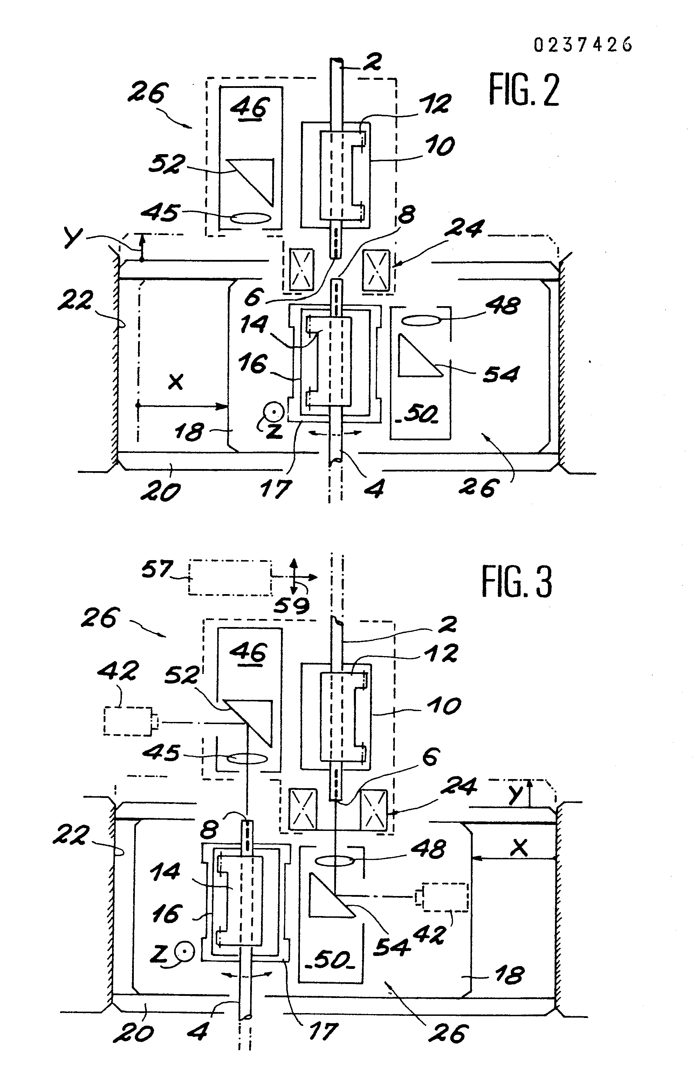

En effectuant une translation appropriée de la platine 18, il est ainsi possible de disposer les optiques 45 et 48 respectivement en regard des extrémités 8 et 6 des fibres 4 et 2 (figure 3).

On peut donc projeter sur l'écran du moniteur 44 l'image de l'extrémité 8 (respectivement 6) de la fibre 4 (respectivement 2) observée, après réflexion sur un miroir 52 (respectivement 54) par exemple plan, par la caméra 42 successivement placée en regard des miroirs 52 et 54, ces miroirs étant respectivement fixés sur les supports 46 et 50 et faisant des angles de 45° avec les axes des optiques 45 et 48.

Le procédé objet de l'invention est mis en oeuvre de la façon suivante avec le système représenté sur les figures 1 à 3.

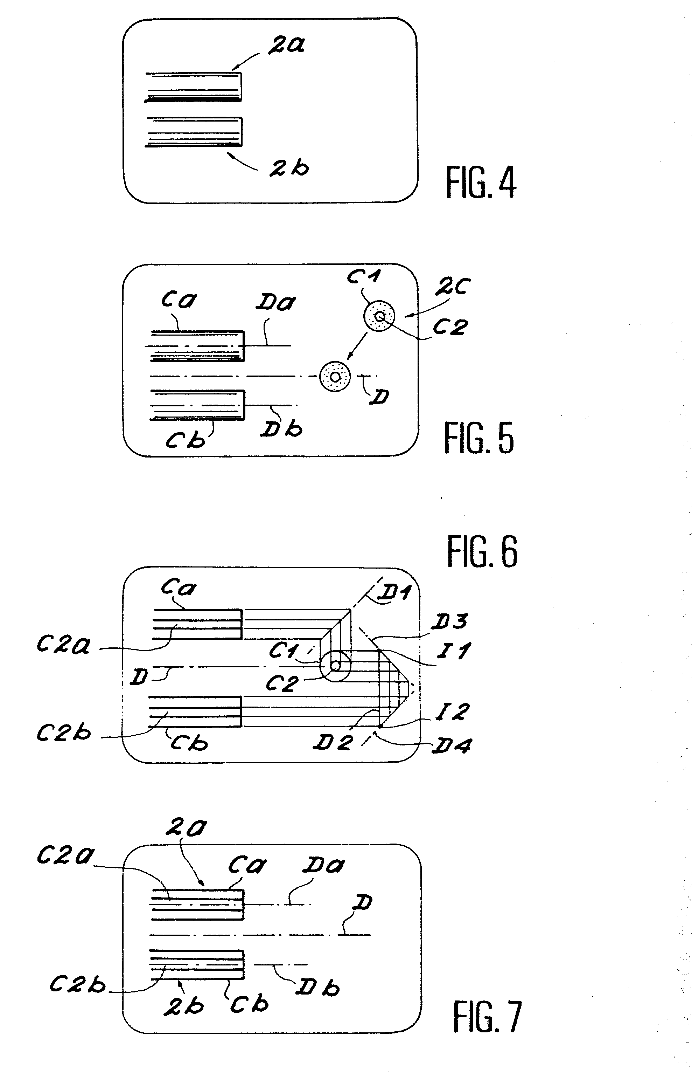

On commence par traiter les images 2a et 2b de la fibre 2, projetées sur l'écran du moniteur 44 qui est relié à des moyens électroniques 56 de traitement d'image (voir figure 4 sur laquelle les images de la fibre 4 ne sont pas représentées). A l'aide de ces moyens électroniques de traitement d'image 56, munis d'un programme de tracé de contours, on trace les contours géométriques respectifs Ca et Cb des images 2a et 2b (figure 5). On trace également, à l'aide des moyens de traitement 56, les axes médians longitudinaux respectifs Da et Db des contours Ca et Cb ainsi que l'axe médian D parallèle aux axes Da et Db et équidistant de ceux-ci.

On projette ensuite sur l'écran du moniteur 44 l'image 2c d'une section transversale de la fibre 2, obtenue par l'observation de l'extrémité 6 de cette fibre 2 comme on l'a indiqué dans la description de la figure 3 et l'on trace également le contour C1 de cette section transversale 2c. En éclairant la fibre 2 à travers sa gaine (par exemple au moyen d'un laser 57 associé à une lentille de focalisation 59) à une distance par exemple de l'ordre de 30 à 50cm de son extrémité 6, on localise l'emplacement du coeur de la fibre 2, coeur dont l'image apparaît alors sur l'écran du moniteur 44 dans la section transversale 2c de la fibre et dont on peut ainsi tracer le contour C2.

On déplace alors sur l'écran, toujours à l'aide des moyens de traitement 56, les contours C1 et C2 dans leur position relative, jusqu'à ce que le centre de C2 se trouve sur l'axe D (figure 5), en regard des images de l'extrémité de la fibre 2.

Comme on le voit sur la figure 6, on procède alors à des rabattements, toujours à l'aide des moyens de traitement d'image 56, pour représenter, dans leurs positions effectives, les traces ou contours C2a et C2b du coeur sur les images Ca et Cb. Ce faisant, il faut tenir compte de ce que les contours Ca et Cb correspondent respectivement à des vues de la fibre optique 2 suivant deux plans perpendiculaires et tracer les génératrices nécessaires aux rabattements en établissant des correspondances correctes entre les contours C1, C2, Ca et Cb.

Comme on le voit sur la figure 6, le contour C2a peut être obtenu en prolongeant les parties du contour Ca qui sont parallèles à l'axe D, du côté du contour C1, en traçant les tangentes à ce contour C1 qui sont perpendiculaires à l'axe D de façon à rencontrer les prolongements précédents, ce qui définit une droite D1, puis en effectuant une projection du contour C2 sur la droite D1 perpendiculairement à l'axe D et enfin en traçant en direction de Ca des droites qui passent par les extrémités de la projection obtenue sur D1 et sont parallèles à l'axe D.

Le contour C2b peut être obtenu en prolongeant les parties du contour Cb qui sont parallèles à l'axe D, du côté du contour C1, en traçant les tangentes à ce dernier qui sont parallèles à l'axe D, en traçant une droite D2 perpendiculaire à l'axe D et telle que les contours Ca, Cb et C1 soient d'un même côté de cette droite D2, et en traçant deux droites D3 et D4 perpendiculaires l'une à l'autre et faisant toutes deux un angle de 45° avec l'axe D, à partir des intersections I1, I2 de la droite D2 avec la tangente à C1 et le prolongement de Cb les plus éloignés l'un de l'autre. On effectue alors une projection de C2 sur D3 parallèlement à l'axe D, on rabat la projection ainsi obtenue sur D4 perpendiculairement à l'axe D et l'on trace en direction de Cb deux droites parallèles à l'axe D à partir des extrémités du segment ainsi obtenu sur D4 afin d'obtenir le contour C2b.

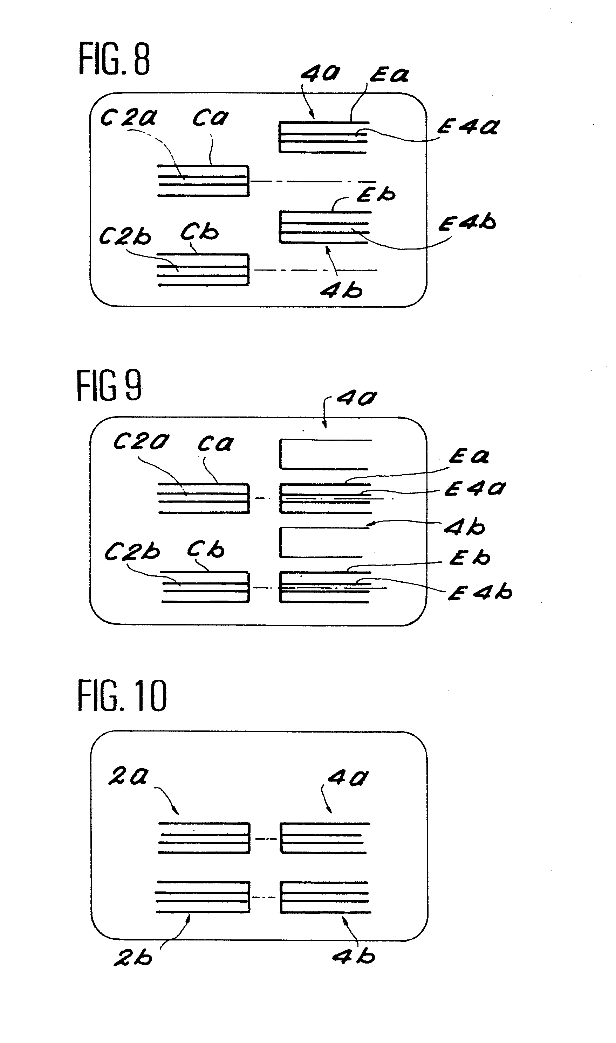

On peut alors effacer les lignes de construction ainsi que les contours C1 et C2 de l'écran du moniteur 44 en conservant simplement sur celui-ci les images 2a et 2b, les contours Ca, Cb, C2a et C2b ainsi que les axes D, Da et Db (figure 7).

On procède alors avec les images 4a et 4b de la fibre 4 comme on vient de l'expliquer à propos de la fibre 2, pour obtenir sur l'écran les contours respectifs Ea et Eb des images 4a et 4b ainsi que les traces respectives E4a et E4b du coeur de la fibre 4, en position effective sur les images 4a et 4b (figure 8).

On déplace ensuite sur l'écran (à l'aide des moyens électroniques de traitement 56) les contours Ea, E4a, Eb et E4b de manière que les axes médians des contours ou traces E4a et E4b du coeur de la fibre 4 soient respectivement alignés avec les axes médians des contours ou traces C2a et C2b du coeur de la fibre 2 (figure 9).

Enfin, on déplace (réellement) la fibre 4, à l'aide de l'autre support 17 et des platines 18 et 20, de telle manière que ses images 4a et 4b soient en parfaite coïncidence avec leurs contours respectifs E4a et E4b (figure 10).

Les fibres sont alors correctement alignées pour l'établissement d'une liaison optique entre elles. Il est donc possible de raccorder ces fibres l'une à l'autre par un processus classique de soudure qui comprend les étapes successives d'avance des fibres l'une vers l'autre puis de préchauffe, de pénétration mutuelle et de fusion des extrémités desdites fibres, les trois dernières étapes étant effectuées au moyen d'un arc électrique ou d'un laser à $CO_2$ par exemple.

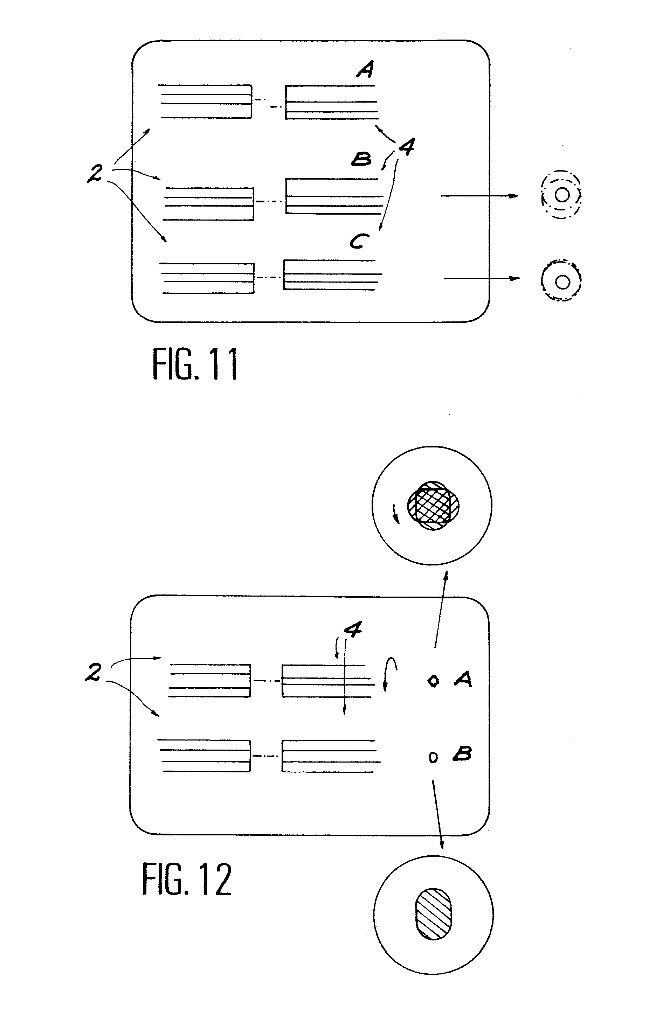

Etant donné à deux fibres coeurs excentrés 2 et 4, leurs images sur l'écran du moniteur sont telles qu'en A -figure 11. Le recouvrement des sections transversales de ces fibres par le procédé que l'on vient de décrire n'est pas optimal (B -figure 11), ce qui est préjudiciable à la résistance mécanique des fibres dans le cas de la réalisation d'une épissure de celles-ci par fusion.

La visualisation des traces des coeurs des fibres selon la présente invention permet de trouver le meilleur compromis en ce qui concerne ce recouvrement. Il suffit en effet de faire tourner la fibre 4 autour de son axe, d'un angle donné, jusqu'à l'optimisation du recouvrement (C-figure 11).

Le couplage optique et la résistance mécanique de la soudure effectuée ultérieurement sont alors optimaux.

De même, étant donné deux fibres 2 et 4 dont les coeurs ont une forme ovale par exemple et qui ont été alignées par le procédé décrit plus haut (A-figure 12), il est possible d'optimiser le couplage obtenu, par rotation de la fibre 4 autour de son axe, jusqu'à l'obtention d'un recouvrement optimal des sections transversales des coeurs des deux fibres 2 et 4 (B-figure 12).

## Revendications

1. Procédé de positionnement relatif d'une première (2) et d'une seconde (4) fibres optiques, en vue d'établir entre elles une liaison optique, procédé caractérisé en ce qu'il comprend les étapes successives suivantes :
- pour chaque fibre (2 ; 4), on forme, sur un écran, au moins une image (2a, 2b ; 4a, 4b) de cette fibre observée suivant au moins un plan parallèle à celle-ci et l'on représente, sur l'écran, sur cette image, la trace (C2a, C2b ; E4a, E4b) du coeur de la fibre, cette trace étant dans sa position effective,
- on déplace, sur l'écran, les contours de la seconde fibre (Ea, Eb) et du coeur (E4a, E4b) de celle-ci jusqu'à ce que le contour dudit coeur soit aligné avec le contour (C2a, C2b) du coeur de la première fibre, et
- l'on déplace la seconde fibre jusqu'à ce que son image coïncide avec le contour correspondant.

2. Procédé selon la revendication 1, caractérisé en ce que
- pour chaque fibre (2; 4), on forme, sur l'écran, des images (2a, 2b; 4a, 4b) de cette fibre, observée suivant deux plans perpendiculaires l'un à l'autre et parallèles à la fibre et l'on représente, sur l'écran, sur chacune de ces images, la trace (C2a, C2b; E4a, E4b) du coeur de la fibre, cette trace étant dans sa position effective,
- on déplace, sur l'écran, les contours de la second fibre (Ea, Eb) et du coeur (E4a, E4b) de celle-ci jusqu'à ce que les contours dudit coeur soient respectivement alignés avec les contours (C2a, C2b) du coeur de la première fibre, et
- l'on déplace la seconde fibre (4) jusqu'à ce que ses images coïncident avec les contours correspondants.

3. Procédé selon la revendication 2, caractérisé en ce que, pour chaque fibre (2, 4), la trace du coeur de celle-ci sur chaque image est représentée en formant d'abord sur l'écran une image, de même agrandissement, des sections transversales (2c) de la fibre et du coeur de celle-ci, en déplaçant ensuite les contours (C1, C2) de ces sections jusqu'à ce que le contour (C2) de la section du coeur soit sur la droite (D) équidistante des axes médians respectifs (Da, Db) des contours (Ca, Cb) de la fibre et en procédant enfin, sur l'écran, à des rabattements pour aboutir à ladite trace dans sa position effective.

4. Procédé selon l'une quelconque des revendications 1 à 3, caractérisé en ce que, après l'étape de déplacement de la seconde fibre, les deux fibres étant alors en regard l'une de l'autre, on effectue en outre une rotation axiale relative de ces fibres pour augmenter le recouvrement des sections transversales des fibres et/ou des coeurs de celles-ci, sections qui sont en regard l'une de l'autre.

Système de positionnement relatif de deux fibres optiques (2, 4) en vue d'établir entre elles une liaison optique, des extrémités (6, 8) respectives de ces fibres étant alors placées en regard l'une de l'autre, système caractérisé en ce qu'il comprend :

- des moyens (10, 14) de maintien des fibres, aptes à maintenir celles-ci orientées suivant une direction donnée (Y), au moins l'un (14) de ces moyens de maintien étant déplaçable,

- des premiers moyens d'observation (24) permettant d'observer chaque fibre suivant au moins un plan parallèle à celle-ci,

- des seconds moyens d'observation (26) permettant d'observer lesdites extrémités respectives des fibres et le coeur de chacune d'elles en son extrémité,

- un moniteur vidéo (44) sur l'écran duquel les images des fibres et les images des extrémités de ces fibres et des coeurs respectifs de celles-ci sont destinées à apparaître, et

- des moyens électroniques (5, 6) de traitement d'image, aptes à tracer et à déplacer sur l'écran des lignes ainsi que des contours d'images qui s'y trouvent,

ce système permettant ainsi de déplacer, sur l'écran, le contour de l'une des fibres et du coeur de celle-ci jusqu'à ce que le contour dudit coeur soit aligné avec le contour du coeur de l'autre fibre puis de déplacer ladite fibre jusqu'à ce que son image coïncide avec le contour correspondant.

6. Système selon la revendication 5, caractérisé en ce que les premiers moyens d'observation (24) sont prévus pour l'observation de chaque fibre (2, 4) suivant deux plans perpendiculaires l'un à l'autre et parallèles à cette fibre, les images des fibres suivant les deux plans étant alors destinées à apparaître sur le moniteur vidéo.

7. Système selon la revendication 6, caractérisé en ce que les premiers moyens d'observation (24) comprennent :

- deux premières optiques de grossissement (28, 30) dont les axes optiques sont perpendiculaires l'un à l'autre ainsi qu'à ladite direction (Y),

- deux moyens de réflexion optique (32, 34), respectivement associés aux premières optiques,

- un moyen séparateur de faisceau (36) apte à capter, par l'intermédiaire des moyens de réflexion, les images formées par les optiques et à transmettre ces images, et

- une caméra vidéo (42) reliée au moniteur et prévue pour observer les images transmises par le séparateur.

8. Système selon l'une quelconque des revendications 6 et 7, caractérisé en ce que les seconds moyens d'observation (26) comprennent deux secondes optiques de grossissement (44, 48), chacune d'elles étant prévue pour donner une image de l'extrémité de l'une des fibres.

9. Système selon la revendication 8, caractérisé en ce que chaque seconde optique (45, 48), qui est associée à l'une des fibres (4), est rendue solidaire du moyen de maintien (10, 14) de l'autre fibre (2, 4) et en ce que les axes optiques des secondes optiques sont parallèles à ladite direction (Y), situés à des distances identiques des fibres dont ils sont respectivement rendus solidaires lorsqu'elles sont placées dans leurs moyens de maintien et disposés de manière à être de part et d'autre des fibres lorsque celles-ci sont alignées.

10. Système selon l'une quelconque des revendications 5 à 9, caractérisé en ce que le moyen de maintien déplaçable (14) est en outre prévu pour faire tourner la fibre (4) qu'il maintient, autour de l'axe de cette fibre.

FIG. 1

0237426

0237426

FIG. 2

FIG. 3

0237426

FIG. 4

FIG. 5

FIG. 6

FIG. 7

0237426

FIG. 8

FIG 9

FIG. 10

0237426

FIG. 11

FIG. 12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 9, no. 170 (P-373)[1893], 16 juillet 1985; & JP-A-60 46 509 (NIPPON DENSHIN DENWA KOSHA) 13-03-1985 | 1,2,5-8 | G 02 B 6/38 |
| | --- | | |
| A | Idem | 3,4 | |
| | --- | | |
| Y | EP-A-0 030 617 (FELTEN & GUILLEAUME CARLSWERK AG) * Page 2, lignes 4-10; page 3, lignes 14-34; figures 1,2 * | 1,2,5-8 | |
| A | | 34 | |
| | --- | | |
| A | EP-A-0 131 488 (COMMISSARIAT A L'ENERGIE ATOMIQUE) * En entier * | 1-5 | DOMAINES TECHNIQUES RECHERCHES (Int. Cl.4) |
| | --- | | G 02 B 6/38 |
| A | L'ONDE ELECTRIQUE, vol. 65, no. 4, juillet-août 1985, pages 59-69, Paris, FR; D. BOSCHER: "Câbles et composants passifs pour liaisons monomodes" * Page 65, colonne 1, lignes 1-20; figure 14 * | 1 | G 02 B 6/42 |
| | --- | | |
| A | GB-A-2 110 412 (KOKUSAI DENSHIN DENWA K.K.) * En entier * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 15-06-1987 | WESBY P.B. |